# EUROPÄISCHE PATENTANMELDUNG

(11) **EP 0 713 050 A2**
(43) Veröffentlichungstag der Anmeldung: **22.05.1996**
(21) Anmeldenummer: 95116733.7
(22) Anmeldetag: 24.10.1995
(51) Int. Cl.: F16M 11/06, H01H 9/02

(54) **Vorrichtung zum Verschwenken eines Steuergehäuses**

(30) Priorität: 17.11.1994 DE 9418392 U
(71) Anmelder: Bernstein Classic GmbH & Co., D-32457 Porta Westfalica (DE)
(72) Erfinder: Wecke,Rolf,Dipl.-Ing., D-31675 Bückeburg (DE); Weiss,Jürgen, D-32312 Lübbecke (DE)
(74) Vertreter: Loesenbeck, Karl-Otto, Dipl.-Ing.

(57) **Zusammenfassung**

Es ist bekannt, ein Steuergehäuse sehr wohl in vertikaler als auch in horizontaler Ebene zu verschwenken. Zur Verschwenkung in vertikaler Ebene ist oberhalb der Drehachse, um die horizontal verschwenkt wird, ein Schwenklager vorgesehen, das jedoch relativ hoch aufbaut und somit zu Problemen, insbesondere bei beengten Platzverhältnissen führt. Durch die Erfindung soll die Bauhöhe kleingehalten werden, so daß sich die Verwendungsfähigkeit des Steuergehäuses verbessert.

Dazu ist vorgesehen, daß das Schwenklager (4) unmittelbar an der Drehachse (2) angeordnet ist. Hierdurch kann praktisch auf die Verwendung eines als separates Bauteil ausgebildeten Schwenklagers verzichtet werden, was die Möglichkeit bietet, die Vorrichtung insgesamt maßlich geringer zu dimensionieren.

## Beschreibung

Die vorliegende Erfindung betrifft eine Vorrichtung zum Verschwenken eines Steuergehäuses gemäß dem Oberbegriff des Anspruches 1.

Zur optimalen Bedienung des Steuergehäuses bzw. der darin eingebauten Steuerelektrik ist ein Verschwenken des Steuergehäuses sowohl in horizontaler als auch in vertikaler Ebene erforderlich.

Bekannt ist es, das Steuergehäuse auf einer vertikal stehenden Drehachse zu lagern, die als Hohlwelle ausgebildet ist, durch die die Steuerkabel ins Innere des Steuergehäuses geführt werden.
Diese Drehachse ermöglicht ein Verschwenken des Steuergehäuses in horizontaler Ebene, wobei üblicherweise Anschläge vorgesehen sind, die den Schwenkwinkel begrenzen, so daß ein die Steuerkabel beschädigendes zu weites Verschwenken vermieden wird.

Weiter ist es bekannt, zur Verschwenkung des Steuergehäuses in vertikaler Ebene oberhalb der Drehachse ein Schwenklager vorzusehen, das üblicherweise als Schwenkbolzen ausgebildet ist, auf dem ein Lagerteil geführt ist.

Zum Festsetzen des Steuergehäuses ist dabei eine Klemmschraube vorgesehen, mit der das Lagerteil festklemmbar ist. Ein Verschwenken ist somit nur dann möglich, wenn die Klemmschraube gelöst wird.

Diese bekannte konstruktive Ausgestaltung der Vorrichtung ist insbesondere deshalb nachteilig, weil sie relativ hoch aufbaut, was zu erheblichen Problemen, insbesondere bei beengten Platzverhältnissen führen kann.

Der vorliegenden Erfindung liegt daher die Aufgabe zugrunde, eine Vorrichtung der gattungsgemäßen Art so zu gestalten, daß sie in ihrer Bauhöhe kleingehalten werden können, so daß sich die Verwendungsfähigkeit des Steuergehäuses verbessert.

Diese Aufgabe wird durch eine Vorrichtung gelöst, die die Merkmale des Anspruches 1 aufweist.

Durch diese konstruktive Ausgestaltung kann praktisch auf die Verwendung eines als separates Bauteil ausgebildeten Schwenklagers verzichtet werden, was naturgemäß die Möglichkeit einer maßlich erheblich geringeren Dimensionierung bietet.

Nach einer vorteilhaften Ausgestaltung der Erfindung ist vorgesehen, daß als Schwenklager die Drehachse ballig, kugelabschnittförmig ausgebildet ist und daß das Lagerteil aus zwei sich gegenüberliegenden Deckeln besteht, die in dem an der Drehachse anliegenden Bereich entsprechend konkav ausgebildet sind, so daß sie vollflächig anliegen. Dabei sind die Deckel so mit einem das Steuergehäuse tragenden Aufnahmeteil verbunden, daß sie durch Verstellen von Klemmitteln, wie Schrauben o.dgl. druckvariabel an den balligen Bereich der Drehachse angepreßt werden können.

Hierdurch ist eine exakte Einstellung der Klemmkraft möglich.

Anstelle der vorgenannten Ausbildung des Schwenklagers können an der Drehachse auch Drehzapfen angeformt sein, die der Lagerung des Aufnahmeteils dienen, wobei die Festsetzung in einer bestimmten Stellung durch Klemmschrauben erfolgen kann.

Ein weiterer Erfindungsgedanke sieht vor, daß die Verschwenkung des Steuergehäuses in vertikaler Ebene durch ein handbetriebenes Getriebe erfolgt, das, beispielsweise in Form eines Schneckengetriebes selbsthemmend sein kann, so daß jede Neigungsposition des Steuergehäuses einstellbar ist, ohne daß eine besondere Festklemmung notwendig ist.
Diese Art der Neigungsverstellung führt zu einer wesentlichen Handhabungserleichterung.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1 und 2: eine erfindungsgemäße Vorrichtung in einer Seitenansicht in unterschiedlichen Schwenkstellungen,
- Fig. 3: einen Längsschnitt durch die Vorrichtung.

Die in den Figuren dargestellte Vorrichtung zum Verschwenken eines nicht dargestellten Steuergehäuses besteht in ihrem Grundaufbau aus einem Unterteil 1, das eine Aufnahme 18 aufweist, in die ein Tragteil, beispielsweise ein Rohr einer Maschine einsetzbar ist, wobei das Unterteil 1 mit dem Tragteil fest verbunden wird.

An dem Unterteil 1 ist ein vertikal verlaufende Drehachse 2 befestigt, die im Sinne einer Hohlwelle ausgebildet ist, wobei durch das Tragteil einerseits Steuerkabel führbar sind, die Bestandteil einer in einem gleichfalls nicht dargestellten Steuergehäuse angeordneten Steuerelektrik sind.

Weiter weist die Vorrichtung ein Auflager 7 auf, das um die Drehachse 2 drehbar ist, so daß hierdurch eine Verschwenkung des Steuergehäuses in einer horizontalen Ebene möglich wird. Das Auflager 7 stützt sich dabei auf dem Unterteil 1 ab.

Weiter liegt an Seitenflanken des Auflagers 7 ein Aufnahmeteil 3 an, das mit einer Auflagerfläche 19 versehen ist, auf der das Steuergehäuse befestigbar ist.

Mittels des Aufnahmeteiles 3 ist das Steuergehäuse in vertikaler Ebene verschwenkbar.
Um dieses Verschwenken zu ermöglichen, ist an der Drehachse 2 ein Schwenklager angeordnet, das oberhalb des Bereiches vorgesehen ist, der vom Auflager 7 umschlossen wird.

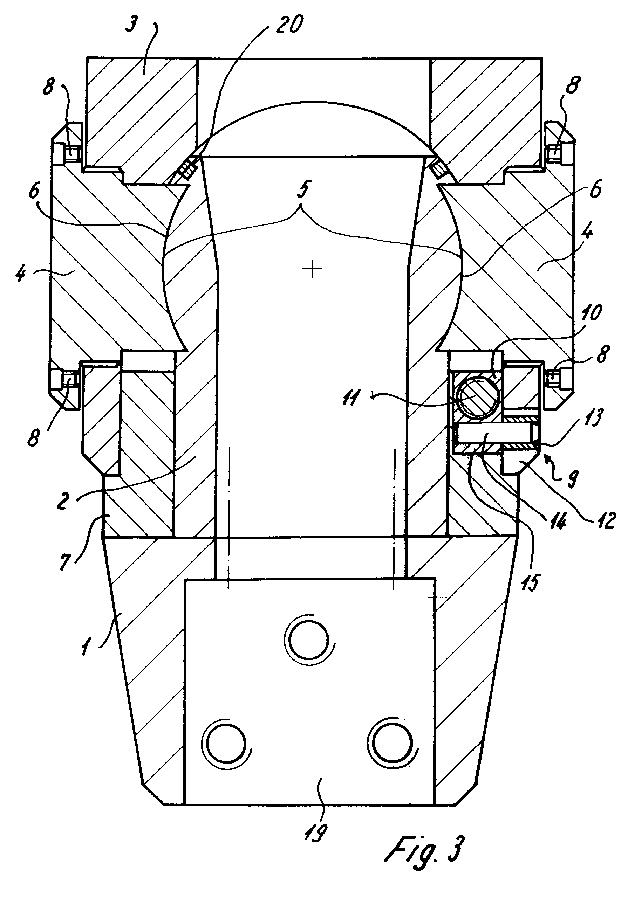

Im vorliegenden Ausführungsbeispiel besteht dieses Schwenklager aus einer balligen Verdickung, die etwa die Form eines Kugelabschnitts aufweist. Dies besonders deutlich in der Fig. 3 erkennbar. Dabei kann die Verdickung sich über den gesamten Umfang der Drehachse erstrecken, was fertigungstechnisch vorteilhaft ist. Denkbar ist aber auch, daß die Verdickung 5 lediglich partiell auf der Drehachse vorgesehen, bzw. daß die Drehachse 2 entsprechend geformt ist, wenn die Verdickung 5 einstückig mit der Drehachse 2 im übrigen ist. Sinnvollerweise wird dann die Verdickung 5 in zwei sich gegenüberliegenden Bereichen vorzusehen sein, da hier Deckel 4 angreifen, die flächig auf den Verdickungen 5 aufliegen und entsprechend der Verdickung 5 als Kalotte 6 ausgebildet sind.

Im übrigen sind die Deckel 4 mit dem Aufnahmeteil 3 verschraubt und an diesem so festsetzbar, daß sie mit einer Flächenpressung an die Verdickungen 5 angepreßt werden.
Zum Verschrauben der Deckel 4 sind Schrauben 8 vorgesehen. Durch das Anpressen der Deckel 4 an die Verdickungen 5 wird ein fester Halt des Aufnahmeteiles 3 auf der Drehachse 2 gewährleistet.

Um eine einfache Verschwenkung des Aufnahmeteiles 3 und somit des angeschlossenen Steuergehäuses zu erreichen, ist im vorliegenden Ausführungsbeispiel ein Schwenkgetriebe 9 vorgesehen, das in einem Seitenbereich des Auflagers 7 bzw. des Aufnahmeteiles 3 vorgesehen ist und zwar in einem Bereich, in dem auch einer der Deckel 4 festgelegt ist.

Das Schwenkgetriebe 9 wird gebildet durch einen Kulissenstein 10, der in einer in dem Auflager 7 vorgesehenen Kulisse 15 längsverschiebbar geführt ist, einem durch den Kulissenstein 10 geführten Schraubbolzen 11, dessen Außengewinde mit einem Innengewinde des Kulissensteines 10 in Wirkverbindung steht, und einem mit dem Kulissenstein 10 über einen Stift 14 verbundenen Klotz 13, der in einer Führungsnut 12 des Aufnahmeteiles 3 gelagert ist.

Bei einem Verdrehen des gegen Verschieben gesicherten Schraubbolzens 11 wird der Kulissenstein 10 in der der Kulisse 15 längsverschieblich geführt, wobei er gleichzeitig den Klotz 13, der sich seitlich in der Führungsnut 12 abstützt, mitnimmt, so daß sich aus der translatorischen Bewegung des Kulissensteins 10 eine rotatorische Bewegung des Aufnahmeteiles 3 ergibt.

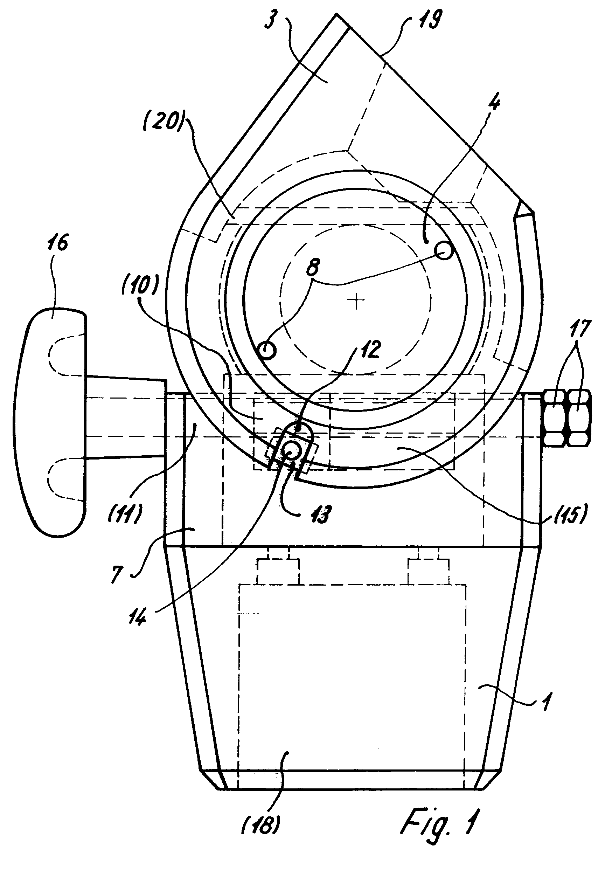

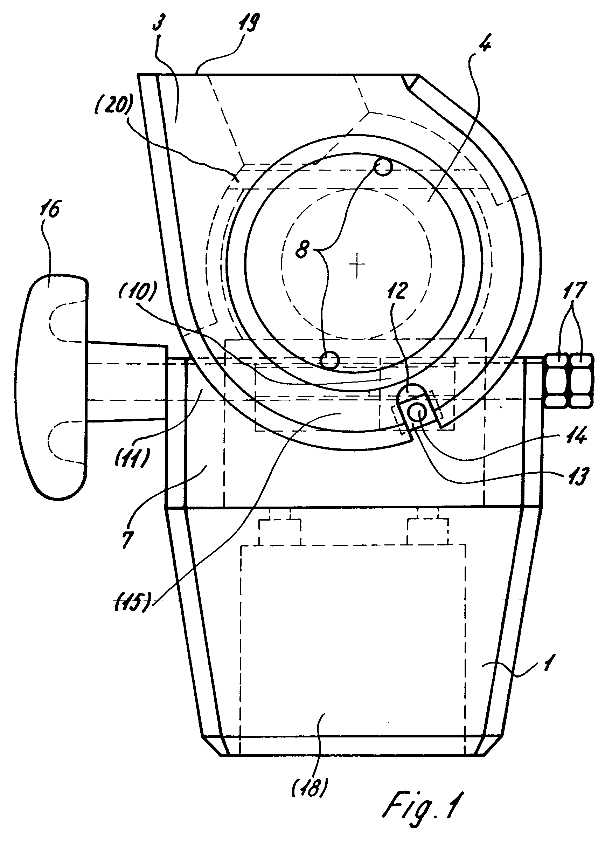

Jeweilige Enstellungen des Kulissensteines 10 und somit Endstellungen des Aufnahmeteiles 3 sind in den Fig. 1 und 2 gezeigt.

Der maximale Schwenkwinkel, bei dessen Festlegung die Deformierbarkeit bzw. Umlenkung der durch die Drehachse 2 geführten Steuerungskabel berücksichtigt werden muß, kann durch die Länge der Kulisse 15, ggf. in Verbindung mit der Breite des Kulissensteines 10 gewählt werden.

Zur einfacheren Handhabung des Schraubbolzens 11 ist dieser endseitig mit einem Knauf 16 versehen, während das andere Ende mit zwei Muttern 17 belegt ist, die gegeneinander gekontert sind und so eine Verschiebesicherung des Schraubbolzens 11 darstellen.

Im übrigen ist die Drehachse 2 gegenüber dem Aufnahmeteil 3 oberhalb der Deckel 4 durch eine Dichtung 20 abgedichtet, was einen spritzwasserdichten Verschluß zur Folge hat.

## Patentansprüche

1. Vorrichtung zum Verschwenken eines mit einer Maschine verbundenen Steuergehäuses, mit einer feststehenden, vertikal verlaufenden Drehachse zum Verschwenken in horizontaler Ebene und einem Schwenklager zum Verschwenken in vertikaler Ebene, **dadurch gekennzeichnet,** daß das Schwenklager unmittelbar an der Drehachse (2) angeordnet ist.

2. Vorrichtung nach Anspruch 1, dadurch gekennzeichnet, daß das Schwenklager aus an der Drehachse (2) angeordneten Verdickungen (5) besteht, in die formschlüssig Lagerteile eines Aufnahmeteiles (3) eingreifen, an dem das Steuergehäuse befestigt ist.

3. Vorrichtung nach Anspruch 2, dadurch gekennzeichnet, daß die Verdickungen (5) in Form eines Kugelabschnittes ausgebildet sind, während die darauf sich abstützenden Lagerteile im Auflagebereich als Kalotte (6) gestaltet sind.

4. Vorrichtung nach einem der Ansprüche 2 bis 3, dadurch gekennzeichnet, daß die Lagerteile als Deckel (4) ausgebildet sind, die mit dem Aufnahmeteil (3) verbunden sind.

5. Vorrichtung nach einem der Ansprüche 1 bis 4 , dadurch gekennzeichnet, daß das Aufnahmeteil (3) formschlüssig an einem an der Drehachse (2) drehbar gelagerten Auflager (7) festgelegt ist.

6. Vorrichtung nach einem der Ansprüche 1 bis 5 , dadurch gekennzeichnet, daß zur Verschwenkung des Steuergehäuses in vertikaler Richtung eine Schwenkgetriebe (9) vorgesehen ist.

7. Vorrichtung nach Anspruch 6, dadurch gekennzeichnet, daß das Schwenkgetriebe (9) aus einem Kulissenstein (10) besteht, der in einer im Auflager (7) vorgesehenen Kulisse (15) längsverschiebbar geführt ist, das der Kulissenstein (10) durch einen Schraubbolzen (11) verschiebbar ist und daß der Kulissenstein (10) mit einem Klotz (13) verbunden ist, der in einer Führungsnut (12) des Aufnahmeteiles (3) festegelegt ist.
